(19) Europäisches Patentamt
European Patent Office
Office européen des brevets

(11) **EP 1 901 928 B1**

(12) **FASCICULE DE BREVET EUROPEEN**

(45) Date de publication et mention de la délivrance du brevet:
**14.09.2011 Bulletin 2011/37**

(21) Numéro de dépôt: **06777546.0**

(22) Date de dépôt: **03.07.2006**

(51) Int Cl.:
**B60B 21/02** *(2006.01)*

(86) Numéro de dépôt international:
**PCT/EP2006/063790**

(87) Numéro de publication internationale:
**WO 2007/003621 (11.01.2007 Gazette 2007/02)**

(54) **JANTE DE VEHICULE AVEC DES SIEGES DE DIAMETRES INEGAUX**

FAHRZEUGFELGE MIT SITZEN MIT NICHT ÜBEREINSTIMMENDEN DURCHMESSERN

VEHICLE RIM WITH NON-MATCHING DIAMETER SEATS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **04.07.2005 FR 0507099**
**11.07.2005 FR 0507424**

(43) Date de publication de la demande:
**26.03.2008 Bulletin 2008/13**

(73) Titulaires:
• **Société de Technologie Michelin**
**63000 Clermont-Ferrand (FR)**
• **Michelin Recherche et Technique S.A.**
**1763 Granges-Paccot (CH)**

(72) Inventeurs:
• **MALEVERGNE, Michel**
**F-63118 Cebazat (FR)**
• **GROLIER, Nicolas**
**F-63100 Clermont-Ferrand (FR)**

(74) Mandataire: **Dequire, Philippe Jean-Marie Denis**
**23, Place des Carmes-Déchaux**
**SGD/LG/PI F35 Ladoux**
**63040 Clermont-Ferrand Cedex 09 (FR)**

(56) Documents cités:
EP-A- 1 002 667    EP-A- 1 194 305
WO-A-01/08905    WO-A-02/055325
DE-A1- 2 343 746

**Description**

La présente invention concerne une jante de véhicule comportant deux sièges de diamètres différents destinée au montage d'un pneumatique et un procédé de montage du pneumatique sur cette jante.

On connaît déjà dans l'état de la technique des jantes de véhicules dont les deux sièges ont des diamètres différents. A titre d'exemple, le document EP 1 002 667 A1 divulgue un pneumatique et une jante dont le siège de plus grand diamètre est disposé du côté extérieur du véhicule pour améliorer le comportement et le confort. Le document WO 02/055325 A1 présente un procédé de montage d'un pneumatique et d'un appui de soutien sur une jante dont les deux sièges sont de diamètres différents. Le procédé de montage consiste à enfiler le bourrelet de plus grand diamètre du pneumatique et l'appui autour de la jante à partir du siège de jante de plus petit diamètre. Une gorge de montage adjacente au siège de jante de plus grand diamètre est ensuite utilisée pour faire franchir ce siège de jante au bourrelet du pneumatique de plus grand diamètre.

L'invention a pour objet une jante de véhicule, de révolution, destinée au montage d'un pneumatique, comportant un premier siège destiné à recevoir et maintenir un premier bourrelet du pneumatique, une gorge de montage et un second siège destiné à recevoir et maintenir un second bourrelet du pneumatique, le second siège étant de diamètre moyen inférieur au diamètre moyen du premier siège, caractérisée en ce que la profondeur radiale maximale de la gorge de montage ($H_{max}$) est telle que le second bourrelet peut franchir le premier siège.

Cette jante a l'avantage de permettre le montage du pneumatique sur la jante en commençant par faire franchir le siège de grand diamètre par le bourrelet du pneumatique de petit diamètre.

De façon préférentielle, la profondeur radiale maximale de la gorge de montage ($H_{max}$) est une fonction du diamètre maximum ($\Phi_{S1max}$) du premier siège et du diamètre minimum ($\Phi_{S2min}$) du second siège :

$$H_{max} = \frac{(\phi_{S1\,max} - \phi_{GM\,min})}{2} = F(\phi_{S1\,max}, \phi_{S2\,min})$$

avec $\Phi_{GMmin}$, le diamètre minimum de la gorge de montage.

Avantageusement, la gorge de montage comprenant un premier flanc adjacent au premier siège, un fond et un second flanc adjacent au second siège, la zone de diamètre minimum ($\Phi_{GMmin}$) de la gorge de montage est adjacente au premier flanc.

Selon une autre caractéristique de la jante selon l'invention, la profondeur minimale du fond de la gorge de montage ($H_{min}$) est une fonction des diamètres maximum ($\Phi_{S2max}$) et minimum ($\Phi_{S22min}$) du second siège :

$$H_{min} = \frac{\phi_{S2\,max} - \phi_{GM\,max}}{2} = G(\phi_{S2\,max}, \phi_{S2\,min})$$

avec $\Phi_{GMmax}$ le diamètre maximal du fond de la gorge de montage.

Selon un mode de réalisation préférentiel, le fond de la gorge de montage comprend une zone sensiblement cylindrique de révolution suivie, du côté du second siège, par une zone tronconique confondue localement avec un cône de révolution ouvert vers ledit second siège.

Par zone sensiblement cylindrique de révolution, on entend une zone cylindrique de révolution mais aussi une zone confondue localement avec un tore de révolution de grand diamètre ou encore avec un cône faiblement incliné, de quelques degrés par exemple.

On utilise la définition courante d'un cône de révolution, c'est-à-dire un solide de révolution à base circulaire terminé en pointe.

De préférence, la zone sensiblement cylindrique de révolution et la zone tronconique sont séparées par un bossage.

Ce bossage peut être confondu localement avec un premier tore de révolution coaxial avec la jante et extérieur à ladite jante puis, du côté du second siège, avec un second tore de révolution coaxial avec la jante et intérieur à ladite jante. Ces deux tores peuvent être reliés par une zone tronconique de révolution.

On utilise la définition mathématique d'un tore, c'est-à-dire une surface de révolution engendrée par un cercle qui tourne autour d'un axe situé dans son plan et ne passant pas par son centre.

Avantageusement, le premier siège est destiné à être disposé du côté extérieur d'un véhicule.

Ce mode de réalisation préférentiel permet d'effectuer le montage du pneumatique sur la jante en conservant la fixation usuelle des disques de roues sur les machines de montage.

A titre d'exemple, le premier siège peut comporter :

- un fond tronconique confondu localement avec un cône de révolution coaxial à la jante et ouvert vers le second siège,
- un bossage de sécurité prolongeant le fond du premier siège vers le second siège, et
- un bord externe prolongeant le fond du premier siège du côté opposé au second siège.

Le second siège peut aussi comporter :

- un fond tronconique confondu localement avec un cône de révolution coaxial à la jante et ouvert vers le premier siège,
- un bossage de sécurité prolongeant le fond du second siège vers le premier siège, et
- un bord externe prolongeant le fond du premier siège du côté opposé au second siège.

L'invention a aussi pour objet un procédé de montage d'un pneumatique sur une roue telle que précédemment décrite, dans lequel :

- on introduit une partie du second bourrelet dans la gorge de montage de la jante en franchissant le premier siège ;
- on achève le franchissement du premier siège par le second bourrelet du pneumatique,
- on fait franchir le second siège par le second bourrelet du pneumatique ; et
- on met en place les deux bourrelets dudit pneumatique sur les sièges respectifs de ladite jante.

L'ordre de mise en place des deux bourrelets est indifférent. Il est aussi possible de les mettre en place simultanément.

Avantageusement, en introduisant une partie du second bourrelet dans la gorge de montage de la jante, on vient bloquer cette partie du second bourrelet contre le bossage intermédiaire de ladite gorge de montage.

Ce bossage permet à la partie du bourrelet qui a déjà franchi le premier siège de rester bloquée à proximité du flanc adjacent au premier siège et ainsi d'achever aisément le franchissement du premier siège.

De façon optionnelle, après avoir achevé le franchissement du premier siège par le second bourrelet du pneumatique :

- on effectue une rotation du pneumatique selon un axe perpendiculaire à l'axe de la roue pour qu'au moins le second bourrelet soit à cheval sur le deuxième siège de ladite jante ; puis
- on met en place successivement les deux bourrelets dudit pneumatique sur les sièges respectifs de ladite jante à l'aide d'un galet de montage.

Cette étape est particulièrement avantageuse lorsque le pneumatique à monter est un pneumatique dont les bourrelets à l'état repos ont un écartement inférieur ou égal à la largeur de la jante. De tels pneumatiques peuvent avoir des flancs relativement rigides, tels ceux d'un pneumatique à flancs courts ou d'un pneumatique autoporteur.

De façon préférentielle, pour mettre en place un bourrelet disposé à cheval sur un siège de jante :

- on amorce la mise en place dudit bourrelet sur ledit siège par un mouvement de rotation axiale relative du pneumatique et de la jante ;
- on positionne un galet de montage en appui axial partiel contre le bord extérieur du siège de ladite jante et en appui partiel contre le bourrelet dudit pneumatique là où le bourrelet est mis en place sur ledit siège ; et
- on met en rotation l'ensemble roue et pneumatique avec un sens de rotation tel que le galet de montage vient en contact avec la partie du bourrelet disposée à l'extérieur du siège et non encore en place sur ledit siège jusqu'à la mise en place complète dudit bourrelet sur ledit siège.

L'invention a aussi pour objet un procédé de démontage d'un pneumatique d'une roue comportant une jante telle que précédemment décrite, dans lequel :

- on déloge le premier bourrelet de sa portée axialement extérieurement ;
- on fait franchir axialement vers la gorge de montage le bossage de sécurité du second siège par le second bourrelet ;
- on déplace le second bourrelet vers le premier siège de ladite jante en prenant appui sur le bossage de ladite gorge de montage ; et
- on fait franchir le premier siège par le second bourrelet.

L'ordre des deux premières opérations de démontage est indifférent. Il peut être avantageux dans certains cas de commencer par faire franchir axialement vers la gorge de montage le bossage de sécurité du second siège par le second bourrelet, notamment dans le cas de pneumatiques à flancs rigides.

Ces opérations de montage et de démontage peuvent être réalisées avantageusement avec l'aide de dispositifs tels des galets de montage, presseurs et des réglettes de démontage décrites dans le document EP 1194305. Ces dispositifs sont bien connus de l'homme du métier.

L'invention a aussi pour objets une jante de véhicule telle que précédemment décrite réalisée à partir d'une tôle métallique, et une roue de véhicule caractérisée en ce qu'elle est constituée d'une jante et d'un disque chacun réalisés à partir d'une tôle métallique et en ce que l'assemblage entre le disque et la jante est effectué par emboîtage sous la gorge de montage adjacente au premier siège de la jante.

D'autres caractéristiques et avantages de l'invention ressortent de la description faite ci-après en référence aux dessins annexés qui montrent, à titre d'exemples non limitatifs, des formes de réalisation de l'objet de l'invention :

- la figure 1 présente schématiquement, vu en section axiale partielle, une jante selon l'invention ;
- les figures 2 à 6 illustrent les phases successives du montage d'un pneumatique sur la jante de la figure 1 ;
- les figures 7 et 8 présentent des étapes alternatives pour le montage d'un pneumatique sur la jante de la figure 1 ;
- les figures 9 et 10 illustrent les phases successives d'un démontage d'un pneumatique de la jante de la figure 1 ; et
- la figure 11 présente une roue avec un second mode de réalisation d'une jante selon l'invention.

On entend par plan méridien ou axial tout plan passant par l'axe A de la roue et de la jante.

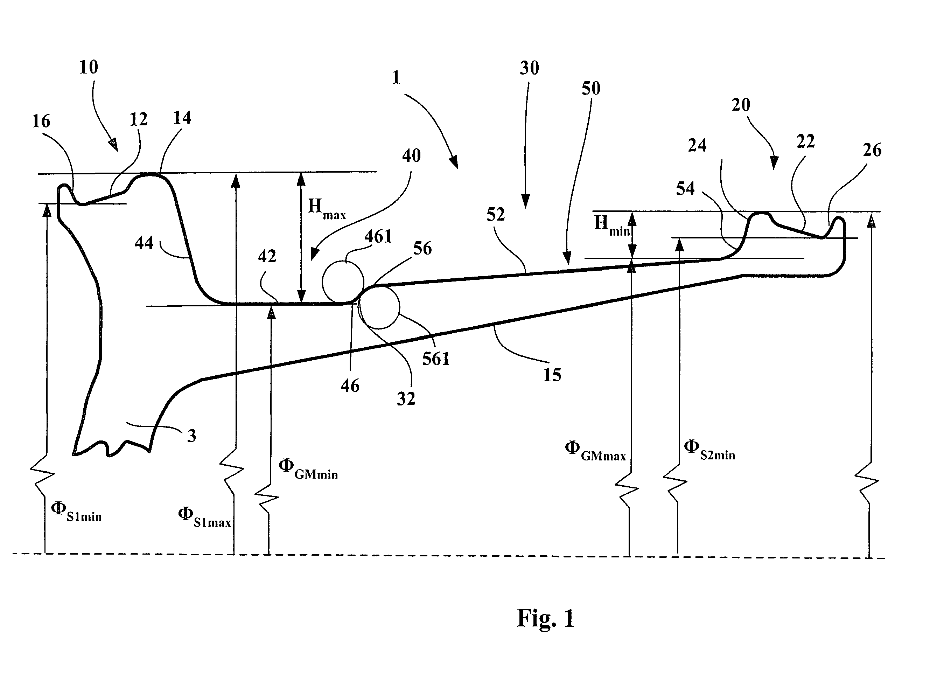

Sur la figure 1 est montrée, vue en section méridienne ou axiale partielle, une jante monobloc 1 selon l'invention. Cette jante forme avec un disque 3 une roue monobloc. Le disque peut aussi être fabriqué indépendamment de la jante et réuni à celle-ci par la suite. La jante 1 comprend un premier siège 10 et un second siège 20 destinés à servir de portée d'appui aux bourrelets de pneumatique.

Le premier siège 10 comprend un fond tronconique 12 confondu localement avec un cône de révolution coaxial à la jante et ouvert vers le second siège 20, un bossage de sécurité 14 prolongeant le fond 12 du premier siège 10 vers le second siège 20, et un bord externe 16 prolongeant le fond 12 du premier siège du côté opposé au second siège 20. Le diamètre minimum du premier siège 10 est $\Phi_{S1min}$. Ce diamètre correspond au diamètre du cercle de jonction entre le fond tronconique 12 et le bord externe 16. Le diamètre maximum du premier siège 10 est $\Phi_{S1max}$. Ce diamètre correspond au diamètre maximum du bossage de sécurité 14.

Le second siège 20 comprend un fond tronconique 22 confondu localement avec un cône de révolution coaxial à la jante et ouvert vers le premier siège 10, un bossage de sécurité 24 prolongeant le fond 22 du second siège 20 vers le premier siège 10, et un bord externe 26 prolongeant le fond 22 du second siège du côté opposé au premier siège 20. Le diamètre minimum du second siège 10 est $\Phi_{S2min}$. Ce diamètre correspond au diamètre du cercle de jonction entre le fond tronconique 22 et le bord externe 26. Le diamètre maximum du second siège 20 est $\Phi_{S2max}$. Ce diamètre correspond au diamètre maximum du bossage de sécurité 24.

Le diamètre moyen du second siège est inférieur à celui du premier siège. Dans l'exemple représenté, l'ordre de grandeur de l'écart entre les diamètres minimum $\Phi_{S1min}$ - $\Phi_{S2min}$ est de l'ordre de 20 mm. L'écart entre les rayons minimum des deux sièges est donc de l'ordre de 10 mm.

Entre les deux sièges 10 et 20 se trouve une gorge de montage 30. Cette gorge comprend deux parties 40, 50 séparées par un bossage intermédiaire 32.

La première partie de la gorge de montage 40 est adjacente au premier siège 10. Elle comprend un fond sensiblement cylindrique 42, un flanc 44 de liaison avec le bossage de sécurité 14 du premier siège 10 et une première partie 46 du bossage 32 de liaison avec la seconde gorge 50. Le diamètre minimum $\Phi_{GMmin}$ de la gorge de montage 30 correspond au diamètre du fond sensiblement cylindrique de révolution 42 de la première gorge de montage 40. La largeur axiale du fond 42 est de l'ordre de 30 à 40 mm. Il est à noter que l'efficacité de la première partie 40 de la gorge 30 est maximisée lorsque la largeur axiale du fond 42 est minimisée. La limite est atteinte lorsque la largeur de ce fond 42 devient sensiblement égale à l'encombrement axial du bourrelet de pneumatique. La plage de 30 à 40 mm satisfait à ces deux exigences.

La seconde partie de la gorge de montage 50 est adjacente d'un côté à la première gorge et de l'autre au bossage de sécurité 24 du second siège 20. Elle comprend un fond sensiblement tronconique 52 confondu localement avec un cône de révolution ouvert vers le second siège 20, un flanc 54 de liaison avec le bossage de sécurité 24 et la seconde partie 56 du bossage 32 de liaison avec la première gorge de montage 40. Le diamètre maximum $\Phi_{GMmax}$ de la gorge de montage 30 correspond au diamètre de la jonction entre le fond tronconique 52 et le flanc de liaison 54.

Dans l'exemple de réalisation représenté à la figure 1, le bossage 32 comprend une première partie 46 confondue localement avec un tore de révolution 461 coaxial avec la jante et extérieur à celle-ci et une seconde partie 56 confondue localement avec un tore de révolution 561 coaxial avec la jante et intérieur à celle-ci.

Du côté radialement intérieur, la jante 1 présente une paroi 15 dont le diamètre diminue continûment du second siège 20 vers la zone de liaison avec le disque 3.

Le rôle d'une gorge de montage est de permettre à un bourrelet de pneumatique de franchir un siège de jante de diamètre supérieur lors du montage du pneumatique sur la jante. Le montage s'effectue en introduisant une partie du bourrelet dans la gorge de montage puis en faisant passer le reste du bourrelet par-dessus le siège en mettant l'ensemble pneu roue en rotation et en pressant le bourrelet vers l'intérieur de la roue avec un galet de montage. Ce rôle est bien connu de tout homme du métier du pneumatique et de la roue.

Au premier ordre, la profondeur de la gorge de montage est ainsi fonction du diamètre intérieur du bourrelet du pneumatique proche du diamètre minimum du siège de la jante et du diamètre maximum du siège. La géométrie particulière du siège de la jante joue aussi un rôle. Il n'existe cependant pas de relation mathématique donnant la profondeur minimum de la gorge de montage et la définition exacte est obtenue expérimentalement.

La roue selon l'invention est caractérisée en ce que la profondeur de la gorge de montage est telle que le second bourrelet de diamètre moyen le plus petit peut franchir le premier siège de diamètre moyen le plus élevé. En conséquence, on peut monter le pneumatique sur la jante selon l'invention en commençant par faire franchir le premier siège par le second bourrelet. Cela permet de modifier le moins possible les habitudes des monteurs des pneumatiques et en particulier, quand le premier siège est disposé du côté extérieur du véhicule, c'est-à-dire du côté où s'effectue la liaison avec le disque 3 de la jante, on peut monter le pneumatique « par l'avant » sans avoir à retourner la roue sur la machine de montage par rapport à la position habituelle.

La profondeur de la roue selon l'invention est donc déterminée en fonction du diamètre maximum du premier siège $\Phi_{S1max}$ et du diamètre minimum du second siège $\Phi_{S2min}$ au lieu de prendre en compte les diamètres minimum et maximum du second siège seulement comme pour la jante présentée dans la demande WO 02/055325 A1. Dans l'exemple représenté, la valeur de $H_{max}$ est de l'ordre de 35 à 50 mm et de $H_{min}$ de l'ordre de 13 à 16 mm selon le diamètre de la jante. C'est pour les plus petits diamètres de jante que la profondeur de la gorge de montage doit être la plus grande, lorsque la géométrie des sièges de la jante ne change pas.

Il est à noter que la gorge de montage de plus grande profondeur est disposée adjacente au siège de plus grand diamètre.

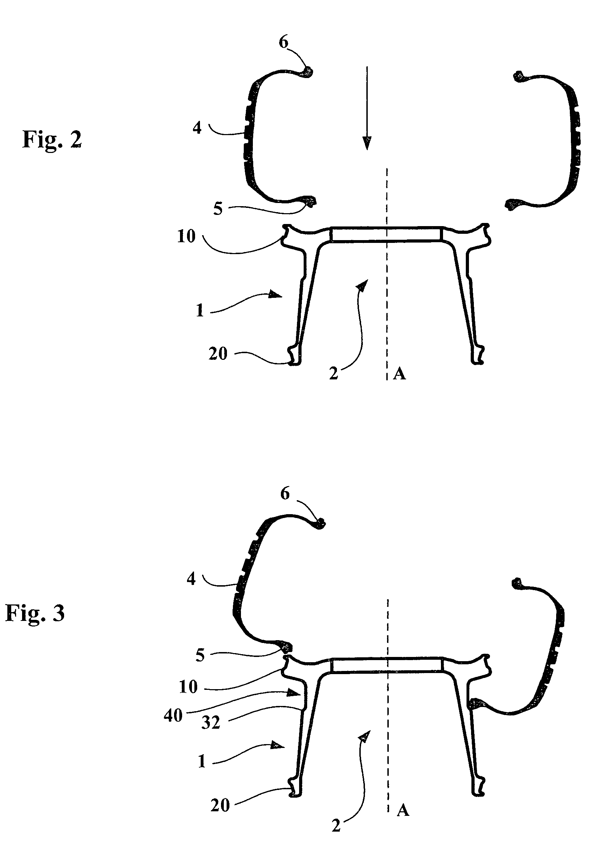

Les figures 2 à 8 décrivent schématiquement les étapes successives de montage d'un pneumatique sur la jante de l'invention.

A la figure 2, on voit une jante 1 de roue 2 montée sur une machine de montage à axe vertical non représentée. Cette jante comprend un siège 10 de plus grand diamètre et un siège 20 de plus petit diamètre. La jante est disposée avec son siège de plus grand diamètre « en haut ». Le disque, relié au côté extérieur de la jante, est face à l'opérateur de la machine. Le pneumatique 4 comprend notamment deux bourrelets 5, 6, de diamètres différents adaptés pour être mis en place sur les sièges 10 et 20 de la jante 1. Le pneumatique est placé de telle sorte que le bourrelet 5 de plus petit diamètre est prêt à être engagé autour du siège 10 de la jante.

A la figure 3, on voit une partie du bourrelet 5 du pneumatique 4 qui est disposée au fond de la gorge de montage 40 alors que la partie symétrique est toujours à l'extérieur du siège 10. Il est à noter que la partie du bourrelet en fond de la gorge 40 est bloquée contre le bossage 32 séparant les deux parties 40 et 50 de la gorge de montage 30 de la jante 1. Cela permet au pneumatique de rester avec un angle d'inclinaison relativement à l'axe vertical limité très favorable pour un franchissement aisé du reste du bourrelet 5. Sans ce bossage, le pneumatique aurait tendance à glisser le long du fond de la gorge de montage et pourrait atteindre une position suffisamment inclinée pour interdire la poursuite du franchissement du siège 10 par le bourrelet 5. Le franchissement complet s'effectue de façon connue par une mise en rotation de l'ensemble pneumatique et roue et à l'aide d'un galet de montage 60 qui exerce une pression vers le bas.

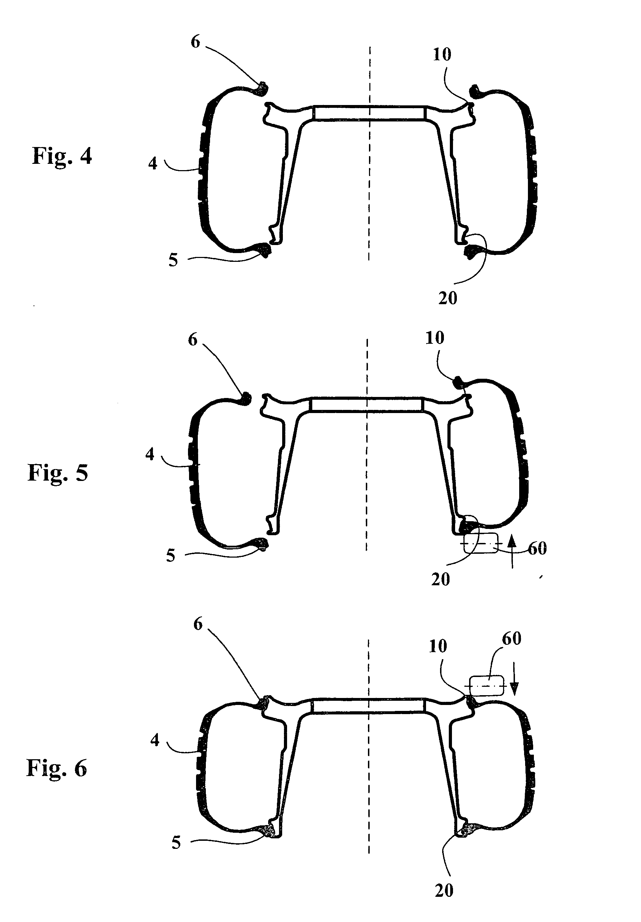

Lorsque le bourrelet 5 a complètement franchi le siège 10, on l'amène progressivement par-dessus le bossage intermédiaire 32 jusqu'à l'extrémité de la gorge de montage 50 contre le flanc 54 adjacent au siège 20. On fait alors franchir au bourrelet 5 ce second siège 20 de façon connue à l'aide de leviers par exemple. L'ensemble se retrouve alors dans la position illustrée à la figure 4 dans lequel les deux bourrelets 5 et 6 sont placés extérieurement relativement aux sièges 10 et 20.

Les figures 5 et 6 illustrent la mise en place successive des deux bourrelets 5 et 6 sur les sièges 20 et 10 respectivement à l'aide de galets de montage.

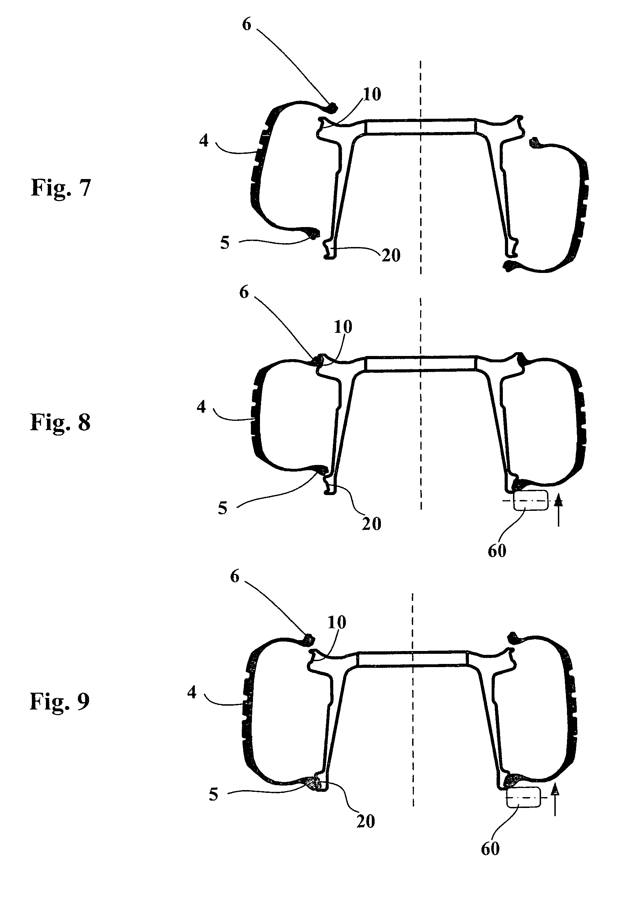

La figure 7 illustre une variante du procédé de montage selon l'invention. Après l'étape illustrée par la figure 3, il est difficile pour certains pneumatiques de les amener dans la position illustrée par la figure 4 en raison de flancs rigides ou de leur position d'équilibre au repos. Dans ce cas, on effectue une rotation du pneumatique selon un axe perpendiculaire à l'axe de la roue pour qu'au moins le second bourrelet soit à cheval sur le siège 20 de la jante. En pratique, cette rotation amène souvent les deux bourrelets dans une position similaire, à cheval sur leur siège respectif (Fig. 7).

On met en place ensuite successivement les deux bourrelets comme suit :

- on amorce la mise en place du bourrelet 5 sur le siège 20 par un mouvement de rotation relative du pneumatique et de la jante ;

- on positionne un galet de montage 60 en appui axial partiel contre le bord extérieur du siège 20 de la jante 1 et en appui partiel contre le bourrelet 5 du pneumatique là où le bourrelet est mis en place sur le siège 20 ;
- on met en rotation l'ensemble roue et pneumatique avec un sens de rotation tel que le galet de montage 60 vient en contact avec la partie du bourrelet disposée à l'extérieur du siège et non encore en place sur le siège jusqu'à la mise en place complète du bourrelet sur le siège (figure 8). La figure 8 illustre la mise en place du bourrelet 5 sur le siège 20 lorsque la mise en place du bourrelet 6 sur le siège 10 a déjà été effectuée par un procédé similaire. Il est indifférent de commencer par l'un ou l'autre des bourrelets.

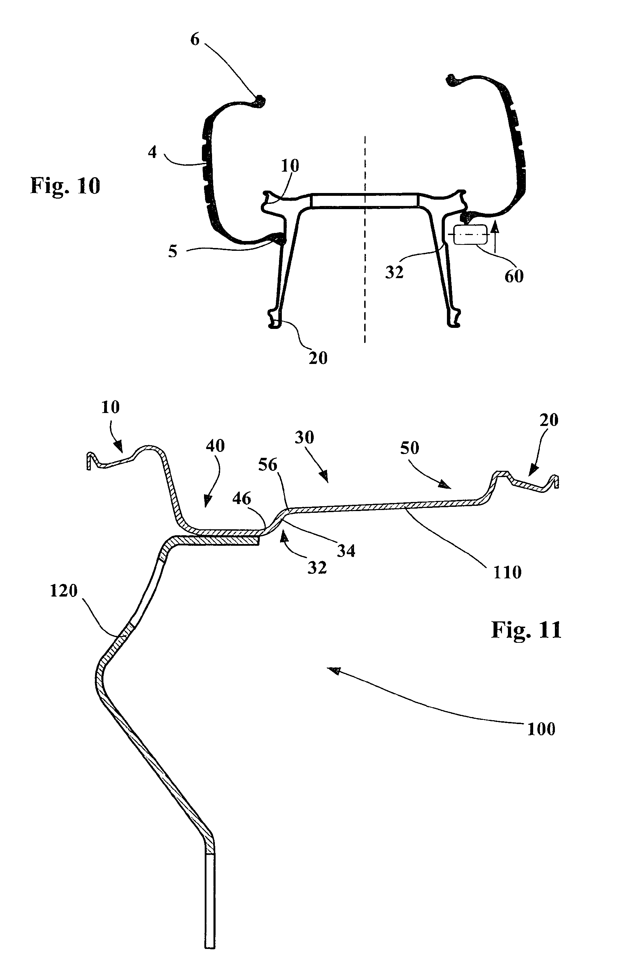

Les figures 9 et 10 illustrent le procédé de démontage du pneumatique de la jante 1 selon l'invention.

La première étape consiste comme décrit dans la demande WO 00/78567 A1 à extraire vers l'extérieur le bourrelet 6 du siège 10. Cette extraction consiste à introduire dans un interstice lubrifié entre la pointe du bourrelet 6 et le siège 10 un insert de démontage sous forme de portion d'anneau circulaire à section méridienne triangulaire de faibles dimensions, puis à éjecter le bourrelet 6 hors du siège 10 vers l'extérieur à l'aide d'un levier de démontage.

On fait ensuite franchir le bossage de sécurité 24 du siège 20 vers l'intérieur au bourrelet 5 à l'aide d'un galet de montage 60 exerçant une pression vers l'intérieur de la jante, l'ensemble pneumatique et roue étant en rotation. Cette étape est illustrée à la figure 9.

La figure 10 illustre la dernière étape qui consiste à faire franchir le siège 10 vers l'extérieur au bourrelet 5 toujours à l'aide du galet de montage 60. Il est à noter que le bossage 32 qui sépare les gorges 40 et 50 a aussi un rôle important lors du démontage du pneumatique en limitant comme lors du montage la mise en biais du pneumatique et ainsi en facilitant le franchissement du siège. En effet, le bourrelet 5 vient se bloquer contre le bossage 32 au lieu d'avoir tendance à glisser vers le siège 20.

La figure 11 présente une roue 100 composée d'un disque 120 et d'une jante 110. Le disque et la jante sont tous deux réalisés à partir d'une tôle métallique. L'assemblage du disque à la jante est effectué sous la gorge de montage 40. Cette gorge de montage a la profondeur $H_{max}$ la plus grande et est adjacente au siège 10. La jante 110 est tout à fait similaire à celle présentée à la figure 1 à l'exception du bossage 32 qui comporte une partie additionnelle tronconique de révolution placée entre les parties 46 et 56 confondues localement avec un tore de révolution. Cela permet d'augmenter l'amplitude radiale du bossage 32.

L'invention n'est pas limitée aux exemples décrits et représentés et diverses modifications peuvent y être apportées sans sortir de sa portée seulement limitée par les revendications suivantes.

**Revendications**

1. Jante de véhicule, de révolution, destinée au montage d'un pneumatique, comportant un premier siège (10) destiné à recevoir et maintenir un premier bourrelet (6) dudit pneumatique, une gorge de montage (30) et un second siège (20) destiné à recevoir et maintenir un second bourrelet (5) dudit pneumatique, ledit second siège (20) etant de diamètre moyen inférieur au diamètre moyen dudit premier siège (10), **caractérisée en ce que** la profondeur radiale maximale de ladite gorge de montage ($H_{max}$) est telle que ledit second bourrelet (5) peut franchir ledit premier siège.

2. Jante de véhicule selon la revendication 1, dans laquelle la profondeur radiale maximale de ladite gorge de montage ($H_{max}$) est une fonction du diamètre maximum ($\Phi_{S1max}$) dudit premier siège et du diamètre minimum ($\Phi_{S2min}$) dudit second siège :

$$H_{max} = \frac{(\phi_{S1max} - \phi_{GMmin})}{2} = F(\phi_{S1max}, \phi_{S2min})$$

avec $\Phi_{GMmin}$, le diamètre minimum de la gorge de montage.

3. Jante de véhicule selon la revendication 2, dans laquelle ladite gorge de montage (30) comprenant un premier flanc (44) adjacent audit premier siège, un fond (42) et un second flanc (54) adjacent audit second siège, la zone de diamètre minimum ($\Phi_{GMmin}$) de la gorge de montage est adjacente au premier flanc.

4. Jante de véhicule selon la revendication 3, dans laquelle la profondeur minimale du fond de ladite gorge de montage ($H_{min}$) est une fonction des diamètres maximum ($\Phi_{S2max}$) et minimum ($\Phi_{S2min}$) dudit second siège :

$$H_{\min} = \frac{\phi_{S2\max} - \phi_{GM\max}}{2} = G(\phi_{S2\max}, \phi_{S2\min})$$

avec $\Phi_{GMmax}$ le diamètre maximal du fond de la gorge de montage.

**5.** Jante de véhicule selon l'une des revendications 3 et 4, dans laquelle le fond de ladite gorge de montage comprend une zone sensiblement cylindrique de révolution suivie, du côté du second siège, par une zone tronconique confondue localement avec un cône de révolution ouvert vers ledit second siège.

**6.** Jante de véhicule selon la revendication 5, dans laquelle ladite zone sensiblement cylindrique de révolution et ladite zone tronconique sont séparées par un bossage.

**7.** Jante de véhicule selon la revendication 6, dans laquelle ledit bossage est confondu localement avec un premier tore de révolution coaxial avec la jante et extérieur à ladite jante puis, du côté du second siège, avec un second tore de révolution coaxial avec la jante et intérieur à ladite jante.

**8.** Jante de véhicule selon la revendication 7, dans laquelle ledit bossage comporte une zone tronconique de révolution disposée entre lesdites parties confondues localement avec un premier et un second tore de révolution.

**9.** Jante de véhicule selon l'une des revendications 1 à 8, dans laquelle ledit premier siège est destiné à être disposé du côté extérieur d'un véhicule.

**10.** Jante de véhicule selon la revendication 9, dans laquelle ledit premier siège (10) comporte :

- un fond tronconique confondu localement avec un cône de révolution coaxial à la jante et ouvert vers le second siège,
- un bossage de sécurité (14) prolongeant le fond du premier siège vers le second siège, et
- un bord externe prolongeant le fond du premier siège du côté opposé au second siège.

**11.** Jante de véhicule selon la revendication 10, dans laquelle ledit second siège (20) comporte :

- un fond tronconique confondu localement avec un cône de révolution coaxial à la jante et ouvert vers le premier siège,
- un bossage de sécurité (24) prolongeant le fond du second siège vers le premier siège, et
- un bord externe prolongeant le fond du premier siège du côté opposé au second siège.

**12.** Jante de véhicule selon l'une des revendications 1 à 11, réalisée à partir d'une tôle métallique.

**13.** Roue de véhicule **caractérisée en ce qu'**elle est constituée d'une jante selon la revendication 12 et d'un disque réalisé à partir d'une tôle métallique et **en ce que** l'assemblage entre le disque et la jante est effectué par emboîtage sous la partie de la gorge de montage adjacente au premier siège de la jante.

**14.** Procédé de montage d'un pneumatique sur une roue comportant une jante selon l'une des revendications 11 et 12, dans lequel :

- on introduit une partie du second bourrelet (5) dans la gorge de montage (30) de la jante en franchissant le premier siège (10);
- on achève le franchissement du premier siège par le second bourrelet du pneumatique ;
- on fait franchir le second siège (30) par le second bourrelet (5) du pneumatique ;
- on met en place les deux bourrelets dudit pneumatique sur les sièges respectifs de ladite jante.

**15.** Procédé de montage selon la revendication 14, dans lequel en introduisant une partie du second bourrelet dans la gorge de montage de la jante, on vient bloquer ladite partie du second bourrelet contre le bossage intermédiaire de ladite gorge de montage.

**16.** Procédé de montage selon l'une des revendications 14 et 15, dans lequel, après avoir achevé le franchissement du premier siège par le second bourrelet du pneumatique :

- on effectue une rotation du pneumatique selon un axe perpendiculaire à l'axe de la roue pour qu'au moins le second bourrelet soit à cheval sur le deuxième siège de ladite jante ; puis
- on met en place successivement les deux bourrelets dudit pneumatique sur les sièges respectifs de ladite jante à l'aide d'un galet de montage.

**17.** Procédé de montage selon la revendication 16, dans lequel pour mettre en place un bourrelet disposé à cheval sur un siège de jante :

- on amorce la mise en place dudit bourrelet sur ledit siège par un mouvement de rotation axiale relative du pneumatique et de la jante ;
- on positionne un galet de montage en appui axial partiel contre le bord extérieur du siège de ladite jante et en appui partiel contre le bourrelet dudit pneumatique là où le bourrelet est mis en place sur ledit siège ;
- on met en rotation l'ensemble roue et pneumatique avec un sens de rotation tel que le galet de montage vient en contact avec la partie du bourrelet disposée à l'extérieur du siège et non encore en place sur ledit siège jusqu'à la mise en place complète dudit bourrelet sur ledit siège.

**18.** Procédé de démontage d'un pneumatique d'une roue comportant une jante selon la revendication 11, dans lequel :

- on déloge le premier bourrelet de sa portée axialement extérieurement ;
- on fait franchir axialement vers la gorge de montage le bossage de sécurité du second siège par le second bourrelet ;
- on déplace le second bourrelet vers le premier siège de ladite jante en prenant appui sur le bossage de ladite gorge de montage ; et
- on fait franchir le premier siège par le second bourrelet.

## Claims

1. Vehicle rim with symmetry of revolution intended for mounting a tyre, comprising a first seat (10) intended to receive and retain a first bead (6) of the said tyre, a mounting groove (30) and a second seat (20) intended to receive and retain a second bead (5) of the said tyre, the said second seat (20) being of an average diameter smaller than the average diameter of the said first seat (10), **characterized in that** the maximum radial depth of the said mounting groove ($H_{max}$) is such that the said second bead (5) can negotiate the said first seat.

2. Vehicle rim according to Claim 1, in which the maximum radial depth of the said mounting groove ($H_{max}$) is a function of the maximum diameter ($\varnothing_{S1max}$) of the said first seat and of the minimum diameter ($\varnothing_{S2min}$) of the said second seat:

$$H_{max} \;=\; \frac{(\varnothing_{S1max} - \varnothing_{GMmin})}{2} \;=\; F(\varnothing_{S1max}, \; \varnothing_{S2min})$$

where $\varnothing_{GMmin}$ is the minimum diameter of the mounting groove.

3. Vehicle rim according to Claim 2, in which, with the said mounting groove (30) having a first sidewall (44) adjacent to the said first seat, a bottom (42) and a second sidewall (54) adjacent to the said second seat, the minimum-diameter region ($\varnothing_{GMgmin}$) of the mounting groove is adjacent to the first sidewall.

4. Vehicle rim according to Claim 3, in which the minimum depth of the bottom of the said mounting groove ($H_{min}$) is a function of the maximum ($\varnothing_{S2max}$) and minimum ($\varnothing_{S2min}$) diameters of the said second seat:

$$H_{min} = \frac{\emptyset_{S2max} - \emptyset_{GMmax}}{2} = G(\emptyset_{S2max}, \emptyset_{S2min})$$

where $\emptyset_{GMmax}$ is the maximum diameter of the bottom of the mounting groove.

**5.** Vehicle rim according to one of Claims 3 and 4, in which the bottom of the said mounting groove comprises a zone that is substantially cylindrical of revolution followed, on the same side as the second seat, by a frustoconical zone that locally coincides with a cone of revolution open towards the said second seat.

**6.** Vehicle rim according to Claim 5, in which the said zone that is substantially cylindrical of revolution and the said frustoconical zone are separated by a hump.

**7.** Vehicle rim according to Claim 6, in which the said hump locally coincides with a first torus of revolution coaxial with the rim and external to the said rim and then, on the same side as the second seat, with a second torus of revolution coaxial with the rim and internal to the said rim.

**8.** Vehicle rim according to Claim 7, in which the said hump comprises a zone that is frustoconical of revolution positioned between the said parts that locally coincide with a first and a second torus of revolution.

**9.** Vehicle rim according to one of Claims 1 to 8, in which the said first seat is intended to be positioned on the outboard side of a vehicle.

**10.** Vehicle rim according to Claim 9, in which the said first seat (10) comprises:

- a frustoconical bottom which locally coincides with a cone of revolution coaxial with the rim and open towards the second seat,
- a safety hump (14) extending the bottom of the first seat towards the second seat, and
- an outer edge extending the bottom of the first seat on the opposite side to the second seat.

**11.** Vehicle rim according to Claim 10, in which the said second seat (20) comprises:

- a frustoconical bottom which locally coincides with a cone of revolution coaxial with the rim and open towards the first seat,
- a safety hump (24) extending the bottom of the second seat towards the first seat, and
- an outer edge extending the bottom of the first seat on the opposite side to the second seat.

**12.** Vehicle rim according to one of Claims 1 to 11, made from metal sheet.

**13.** Vehicle wheel, **characterized in that** it consists of a rim according to Claim 12, and of a disc made from metal sheet, and **in that** the disc and the rim are assembled by fitting them together under the part of the mounting groove that is adjacent to the first seat of the rim.

**14.** Method of mounting a tyre on a wheel comprising a rim according to one of Claims 11 and 12, in which:

- part of the second bead (15) is inserted into the mounting groove (30) of the rim, negotiating the first seat (10) ;
- the second bead (5) of the tyre finishes negotiating the first seat (15) ;
- the second bead of the tyre is made to negotiate the second seat; and
- the two beads of the said tyre are placed on the respective seats of the said rim.

**15.** Mounting method according to Claim 14, in which, while inserting part of the second bead into the mounting groove of the rim, the said part of the second bead is immobilized against the intermediate hump of the said mounting groove.

**16.** Mounting method according to one of Claims 14 and 15, in which, once the second bead of the tyre finishes negotiating the first seat:

- the tyre is rotated about an axis perpendicular to the axis of the wheel so that at least the second bead straddles the second seat of the said rim; then
- the two beads of the said tyre are placed in turn on the respective seats of the said rim using a tyre-mounting roller.

**17.** Mounting method according to Claim 16, in which in order to position a bead that is straddling a rim seat:

- the fitting of the said bead on the said seat starts with a relative axial rotational movement of the tyre and of the rim;
- a tyre-mounting roller is positioned to bear axially partially against the outer edge of the seat of the said rim and partially against the bead of the said tyre in the region where the bead is in place on the said seat;
- the wheel and tyre assembly is rotated in a direction of rotation such that the tyre-mounting roller comes into contact with that part of the bead that is positioned on the outside of the seat and is not yet in place on the said seat and this is continued until the said bead is fully in place on the said seat.

**18.** Method of removing a tyre from a wheel comprising a rim according to Claim 11, in which:

- the first bead is dislodged from its seating axially outwards;
- the second bead is made to negotiate the safety hump of the second seat axially in the direction of the mounting groove;
- the second bead is moved towards the first seat of the said rim while bearing against the hump of the said mounting groove; and
- the second bead is made to negotiate the first seat.

**Patentansprüche**

**1.** Drehsymmetrische Fahrzeugfelge, die zur Montage eines Luftreifens bestimmt ist, mit einem ersten Sitz (10), der dazu bestimmt ist, einen ersten Wulst (6) des Luftreifens aufzunehmen und zu halten, mit einer Montagenut (30) und mit einem zweiten Sitz (20), der dazu bestimmt ist, einen zweiten Wulst (5) des Luftreifens aufzunehmen und zu halten, wobei der zweite Sitz (20) einen geringeren mittleren Durchmesser hat als der mittlere Durchmesser des ersten Sitzes (10), **dadurch gekennzeichnet, dass** die maximale radiale Tiefe ($H_{max}$) der Montagenut so ist, dass der zweite Wulst (5) den ersten Sitz überqueren kann.

**2.** Fahrzeugfelge nach Anspruch 1, bei der die maximale radiale Tiefe ($H_{max}$) der Montagenut eine Funktion des maximalen Durchmessers ($\Phi_{S1max}$) des ersten Sitzes und des minimalen Durchmessers ($\Phi_{S2min}$) des zweiten Sitzes ist:

$$H_{max} = \frac{\left(\phi_{S1\,max} - \phi_{GM\,min}\right)}{2} = F\!\left(\phi_{S1\,max}, \phi_{S2\,min}\right)$$

mit $\Phi_{GMmin}$ dem minimalen Durchmesser der Montagenut.

**3.** Fahrzeugfelge nach Anspruch 2, bei der, wenn die Montagenut (30) eine erste Flanke (44), die dem ersten Sitz benachbart ist, einen Boden (42) und eine zweite Flanke (54) enthält, die dem zweiten Sitz benachbart ist, die Zone minimalen Durchmessers ($\Phi_{GMmin}$) der Montagenut der ersten Flanke benachbart ist.

**4.** Fahrzeugfelge nach Anspruch 3, bei der die minimale Tiefe ($H_{min}$) des Bodens der Montagenut eine Funktion des maximalen ($\Phi_{S2max}$) und minimalen Durchmessers ($\Phi_{S2min}$) des zweiten Sitzes ist:

$$H_{min} = \frac{\phi_{S2\,max} - \phi_{GM\,max}}{2} = G\!\left(\phi_{S2\,max}, \phi_{S2\,min}\right)$$

mit $\Phi_{GMmax}$ dem maximalen Durchmesser des Bodens der Montagenut.

5. Fahrzeugfelge nach einem der Ansprüche 3 und 4, bei der der Boden der Montagenut eine im Wesentlichen zylindrische drehsymmetrische Zone enthält, auf die auf der Seite des zweiten Sitzes eine kegelstumpfförmige Zone folgt, die lokal mit einem zum zweiten Sitz hin offenen drehsymmetrischen Kegel zusammenfällt.

6. Fahrzeugfelge nach Anspruch 5, bei der die im Wesentlichen zylindrische drehsymmetrische Zone und die kegelstumpfförmige Zone durch einen Buckel getrennt sind.

7. Fahrzeugfelge nach Anspruch 6, bei der der Buckel lokal mit einem ersten drehsymmetrischen Torus koaxial zur Felge und außerhalb der Felge und dann auf der Seite des zweiten Sitzes mit einem zweiten drehsymmetrischen Torus koaxial zur Felge und innerhalb der Felge zusammenfällt.

8. Fahrzeugfelge nach Anspruch 7, bei der der Buckel eine kegelstumpfförmige drehsymmetrische Zone enthält, die zwischen den Teilen angeordnet ist, die lokal mit einem ersten und einem zweiten drehsymmetrischen Torus zusammenfallen.

9. Fahrzeugfelge nach einem der Ansprüche 1 bis 8, bei der der erste Sitz dazu bestimmt ist, auf der Außenseite eines Fahrzeugs angeordnet zu werden.

10. Fahrzeugfelge nach Anspruch 9, bei der der erste Sitz (10) aufweist:

   - einen kegelstumpfförmigen Boden, der lokal mit einem drehsymmetrischen Kegel koaxial zur Felge und zum zweiten Sitz offen zusammenfällt,
   - einen Sicherheitsbuckel (14), der den Boden des ersten Sitzes zum zweiten Sitz verlängert, und
   - einen Außenrand, der den Boden des ersten Sitzes auf der dem zweiten Sitz entgegengesetzten Seite verlängert.

11. Fahrzeugfelge nach Anspruch 10, bei der der zweite Sitz (20) aufweist:

   - einen kegelstumpfförmigen Boden, der lokal mit einem drehsymmetrischen Kegel koaxial zur Felge und zum ersten Sitz offen zusammenfällt,
   - einen Sicherheitsbuckel (24), der den Boden des zweiten Sitzes zum ersten Sitz hin verlängert, und
   - einen Außenrand, der den Boden des ersten Sitzes auf der dem zweiten Sitz entgegengesetzten Seite verlängert.

12. Fahrzeugfelge nach einem der Ansprüche 1 bis 11, die aus einem Metallblech hergestellt wird.

13. Fahrzeugrad, **dadurch gekennzeichnet, dass** es aus einer Felge nach Anspruch 12 und aus einer Scheibe besteht, die ausgehend von einem Metallblech hergestellt wird, und dass der Zusammenbau zwischen der Scheibe und der Felge durch Ineinanderfügen unter dem Teil der Montagenut erfolgt, der dem ersten Sitz der Felge benachbart ist.

14. Verfahren zur Montage eines Luftreifens auf ein Rad, das eine Felge nach einem der Ansprüche 11 und 12 aufweist, bei dem:

   - ein Teil des zweiten Wulsts (5) in die Montagenut (30) der Felge eingeführt wird, indem er den ersten Sitz (10) überquert;
   - das Überqueren des ersten Sitzes durch den zweiten Wulst des Luftreifens vollendet wird;
   - der zweite Sitz (20) vom zweiten Wulst (5) des Luftreifens überquert wird;
   - die zwei Wülste des Luftreifens auf den jeweiligen Sitzen der Felge eingesetzt werden.

15. Montageverfahren nach Anspruch 14, bei dem durch Einführen eines Teils des zweiten Wulsts in die Montagenut der Felge der Teil des zweiten Wulsts gegen den Zwischenbuckel der Montagenut blockiert wird.

16. Montageverfahren nach einem der Ansprüche 14 und 15, bei dem, nachdem das Überqueren des ersten Sitzes durch den zweiten Wulst des Luftreifens vollendet wurde:

   - eine Drehung des Luftreifens gemäß einer Achse lotrecht zur Achse des Rads durchgeführt wird, damit mindestens der zweite Wulst sich rittlings auf dem zweiten Sitz der Felge befindet; dann
- nacheinander die zwei Wülste des Luftreifens auf den jeweiligen Sitzen der Felge mit Hilfe einer Montagerolle eingesetzt werden.

**17.** Montageverfahren nach Anspruch 16, bei dem zum Einsetzen eines Wulsts, der rittlings auf einem Felgensitz angeordnet ist:

- das Einsetzen des Wulsts auf dem Sitz durch eine relative axiale Drehbewegung des Luftreifens und der Felge begonnen wird;
- eine Montagerolle in teilweiser axialer Auflage gegen den Außenrand des Sitzes der Felge und in teilweiser Auflage gegen den Wulst des Luftreifens dort positioniert wird, wo der Wulst auf dem Sitz eingesetzt wird;
- die Einheit aus Rad und Luftreifen mit einer solchen Drehrichtung in Drehung versetzt wird, dass die Montagerolle mit dem Teil des Wulsts in Kontakt kommt, der außerhalb des Sitzes angeordnet und noch nicht auf dem Sitz eingesetzt ist, bis der Wulst vollständig auf dem Sitz eingesetzt ist.

**18.** Verfahren zum Demontieren eines Luftreifens von einem Rad, das eine Felge nach Anspruch 11 aufweist, bei dem:

- der erste Wulst von seiner Auflagefläche axial nach außen hin entfernt wird;
- der Sicherheitsbuckel des zweiten Sitzes axial zur Montagenut vom zweiten Wulst überquert wird;
- der zweite Wulst zum ersten Sitz der Felge verschoben wird, indem er auf dem Buckel der Montagenut aufliegt; und
- der erste Sitz vom zweiten Wulst überquert wird.

Fig. 1

Fig. 2

Fig. 3

Fig. 4

Fig. 5

Fig. 6

**Fig. 7**

**Fig. 8**

**Fig. 9**

**Fig. 10**

6

4

10

5

32

60

20

10

40

56

46

30

34

32

50

20

110

120

**Fig. 11**

100

**EP 1 901 928 B1**

## RÉFÉRENCES CITÉES DANS LA DESCRIPTION

**Documents brevets cités dans la description**

- EP 1002667 A1
- WO 02055325 A1
- EP 1194305 A
- WO 0078567 A1